# EUROPÄISCHE PATENTANMELDUNG

(11) **EP 0 619 180 A2**
(43) Veröffentlichungstag der Anmeldung: **12.10.1994**
(21) Anmeldenummer: 94101373.2
(22) Anmeldetag: 31.01.1994
(51) Int. Cl.: B32B 15/08, B44C 1/14, B32B 27/06, B44C 1/10

(54) **Verfahren zum Beschichten einer Trägerplatte sowie insbesondere nach diesem Verfahren hergestellte Trägerplatte**

(30) Priorität: 05.04.1993 DE 4311250
(71) Anmelder: FRITZ BORSI KG, D-77746 Schutterwald (DE)
(72) Erfinder: Kall, Klaus, D-77656 Offenburg-Elgersweyer (DE)
(74) Vertreter: Goddar, Heinz J., Dr.

(57) **Zusammenfassung**

Die Erfindung betrifft ein Verfahren zum Beschichten einer Trägerplatte aus zumindest teiltransparentem Kunststoffmaterial, insbesondere aus Polymethylmethacrylat, bei dem auf zumindest eine Flache der Trägerplatte eine Oberflächenschicht aus im Vergleich zu Kunststoffmaterial der Trägerplatte wesentlich härteren, kratzfesten, vorzugsweise anorganischen Material, wie SiO₂ oder dergleichen, aufgebracht wird, dadurch gekennzeichnet, daß die Oberflächenschicht zunächst auf eine Kunststoffolie aufgebracht und alsdann der aus der Kunststoffolie und der Oberflächenschicht bestehende Vorverbund mit der Trägerplatte verbunden wird, sowie insbesondere nach diesem Verfahren hergestellte Trägerplatte.

## Beschreibung

Die Erfindung betrifft ein Verfahren zum Beschichten einer Trägerplatte aus zumindest teiltransparentem Kunststoffmaterial, insbesondere aus Polymethylmethacrylat, bei dem auf zumindest eine Fläche der Trägerplatte eine Oberflächenschicht aus im Vergleich zu Kunststoffmaterial der Trägerplatte wesentlich härteren, kratzfesten, vorzugsweise anorganischen Material, wie SiO₂ oder dergleichen, aufgebracht wird, sowie eine insbesondere nach diesem Verfahren hergestellte Trägerplatte.

Trägerplatten dieser Art, die im Sinne der Erfindung nicht nur eben ausgebildet sein können, sondern z. B. auch Wölbungen unterschiedler Form aufweisen können, werden bspw. als Armaturenverkleidungen von Kraftfahrzeugen verwendet. Wichtig ist dabei, daß die Oberfläche des für die Trägerplatte vorzugsweise verwendeten transparenten Kunststoffmaterials, nämlich Polymethalmethacrylat, welche aufgrund der Materialeigenschaften des Kunststoffmaterials nicht hinreichend kratzfest ist, durch die eingangs beschriebene Oberflächenschicht kratzfest gemacht wird. Ferner ist es insbesondere bei dem vorstehend beschriebenen Anwendungszweck wichtig, daß die Oberflächenschicht die Trägerplatte auch blendfrei macht, d. h. also, ihr ein mattes Aussehen gibt.

Bislang ist es üblich, Trägerplatten der vorstehend beschriebenen Art dadurch kratzfest zu machen, daß z. B. durch Aufdampfen auf die Trägerplatte eine kratzfeste Oberflächenschicht, vorzugsweise aus Si0₂ oder ähnlichem Material bestehen, aufgebracht wird. Derartige Oberflächenschichten lassen sich nur mit verhältnismäßig großem Verfahrensaufwand auf die Trägerplatte aufbringen, wobei außerdem spätere Verformungen der Trägerplatte zu Schwierigkeiten führen können. Ferner hat die vorstehende Art der Oberflächenbeschichtung den Nachteil, daß sich kein für Anwendungszwecke der beschriebenen Art hinreichender Mattierungseffekt erzielen läßt.

Der Erfindung liegt daher die Aufgabe zugrunde, das Verfahren und die Trägerplatte der gattungsgemäßen Art dahingehend weiterzubilden, daß mit geringem Aufwand zuverlässig sowohl kratzfeste als auch optisch matte Trägerplatten erhalten werden können.

Erfindungsgemäß wird diese Aufgabe in Weiterbildung des gattungsgemäßen Verfahrens dadurch gelöst, daß die Oberflächenschicht zunächst auf eine Kunststoffolie aufgebracht und alsdann der aus der Kunststoffolie und der Oberflächenschicht bestehende Vorverbund mit der Trägerplatte verbunden wird.

Dabei kann vorgesehen sein, daß der Vorverbund mit der Trägerplatte verklebt wird.

Die Erfindung schlägt alternativ hierzu auch vor, daß auf die der Kunststoffolie abgewandte Seite der Oberflächenschicht eine Deckfolie aufgebracht und die aus dem Vorverbund und der Deckfolie bestehende Schichtanordnung unter Verwendung der Kunststoffolie als Haftfolie unter Ablösen der Deckfolie im Rollenprägeverfahren mit der Trägerplatte verbunden wird.

Nach der Erfindung kann auch vorgesehen sein, daß eine Kunststoffolie aus Polymethylmethacrylat verwendet wird.

Die Trägerplatte nach der Erfindung, aus zumindest teiltransparentem Kunststoffmaterial, insbesondere Polymethylmethacrylat, die zumindest auf einer Fläche mit einer Oberflächenschicht aus im Vergleich zum Kunststoffmaterial der Trägerplatte wesentlich kratzfesterem, vorzugsweise anorganischem Material, wie SiO₂ oder dergleichen, versehen ist, insbesondere hergestellt nach dem Verfahren nach einem der vorangehenden Anprüche, insbesondere hergestellt nach dem Verfahren nach der Erfindung, ist dadurch gekennzeichnet, daß die Oberflächenschicht mit der Trägerplatte unter Zwischenschaltung einer Kunststoffolie verbunden ist.

Dabei kann vorgesehen sein, daß die Kunststoffolie mit der Trägerplatte verklebt ist.

Ferner schlägt die Erfindung auch vor, daß die Kunststoffolie, als Haftfolie (18) ausgebildet, mit der Trägerplatte (10) im Rollenprägeverfahren verbunden ist.

Nach der Erfindung kann auch vorgesehen sein, daß die Kunststoffolie aus Polymethylmethacrylat besteht.

Der Erfindung liegt die überraschende Erkenntnis zugrunde, daß es gelingt, insbesondere als Armaturenverkleidung bei Kraftfahrzeugen geeignete Trägerplatten aus vorzugsweise transparentem Polymethalmethacrylat oder dergleichen mit hervorragenden Oberflächeneigenschaften, sowohl hinsichtlich der Kratzfestigkeit als auch hinsichtlich des Mattierungseffektes, in wirtschaftlicher Weise dadurch herzustellen, daß nicht mehr, wie bislang üblich, die Trägerplatte unmittelbar mit der entsprechenden Oberflächenbeschichtung versehen wird, sondern daß die Oberflächenschicht zunächst auf eine Kunststoffolie aufgebracht und dann der aus der mit der Oberflächenschicht versehenen Kunststoffolie bestehende Vorverbund endgültig mit der Trägerplatte verbunden wird.

In dem Fall, daß das Verbinden des Vorverbundes mit der Trägerplatte unter Zwischenschaltung einer aus Klebematerial bestehenden Verbindungsschicht erfolgt, kann als Kunststoffolie bspw. eine Polymethalmethacrylatfolie mit einer Dicke von 0,5 bis 0,75 mm verwendet werden, wobei im Vergleich hierzu bemerkt sei, daß die Dicke der Polymethylmethacrylat-Trägerplatte etwa 3 mm betragen kann.

Als Vorverbund kann dabei bspw. ein unter der Bezeichnung Plexiglas-Folie F von der Firma Röhm GmbH geliefertes Erzeugnis verwendet werden.

Wir der Vorverbund im Rollenprägeverfahren auf die Trägerplatte aufgebracht, z. B. nach einer Vorgehensweise, wie sie in der DE-PS 38 08 689 beschrieben ist, so dient die Kunststoffolie selbst als Haftfolie, welche die Verbindung zwischen der Oberflächenschicht und der Trägerplatte herstellt.

Dabei wird in bekannter Weise die zusätzlich in diesem Fall vorgesehene Deckfolie beim Rollenprägen abgezogen, bedingt durch die bessere Haftung des aus der Haftfolie und der Oberflächenschicht bestehenden Vorverbundes an der Trägerplatte 10, im Vergleich zur Haftung zwischen der Oberflächenschicht und der Deckfolie.

Mittels des erfindungsgemäßen Verfahrens lassen sie Trägerplatten herstellen, die den Anforderungen der z. B. Kfz-Industrie bezüglich Kratzfestigkeit und Blendfreiheit von Armaturenverkleidungen hervorragend gerecht werden.

Weitere Merkmale und Vorteile der Erfindung ergeben sich aus der nachstehenden Beschreibung, in der Ausführungsbeispiele anhand der schematischen Zeichnungen im einzelnen erläutert sind. Dabei zeigt:
- Fig. 1: ein erstes Ausführungsbeispiel einer Trägerplatte nach der Erfindung im Schnitt senkrecht zur Plattenebene; und
- Fig. 2: ein zweites Ausführungsbeispiel einer Trägerplatte nach der Erfindung in Fig. 1 entsprechender Darstellung.

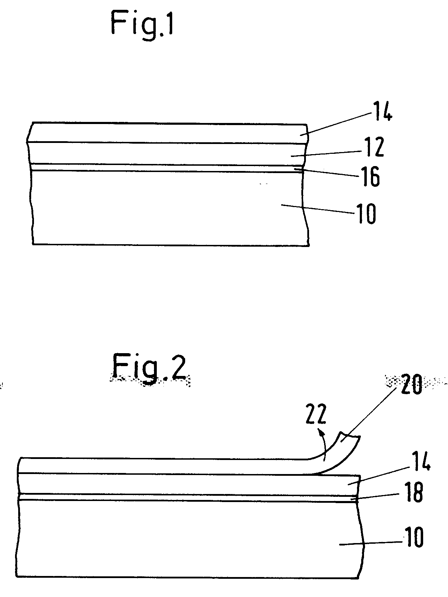

Wie Fig. 1 erkennen läßt, ist dort auf eine Trägerplatte 10 aus Polymethalmethacrylat, die bei dem gezeigten Ausführungsbeispiel eine Dicke von 3 mm hat, eine Kunststoffolie 12, bestehend aus Polymethylmethacrylat und mit einer Dicke von 0,6 mm, aufgebracht, welche mit einer Oberflächenschicht 14 aus Si0₂-haltigem anorganischem Material mit großer Härte und daher hoher Haftfestigkeit versehen ist, wobei die Oberflächenschicht 14 auch als Mattierungsschicht wirkt. Die Kunststoffolie 12 ist mit der Trägerplatte 10 unter Zwischenschaltung einer Verbindugnsschicht 16 aus Klebermaterial verklebt.

Die Herstellung der Trägerplatte gemäß Fig. 1 umfaßt die folgenden Schritte: Zunächst wird auf die Kunststoffolie 12 die Oberflächenschicht 14 aufgebracht, z. B. durch ein Vakuumbeschichtungsverfahren. Der flexible Vorverbund, welcher aus der Kunststoffolie 12 und der Oberflächenschicht 14 besteht, wie er bspw. unter der Bezeichnung PlexiglasFolie F durch die Firma Röhm GmbH, Darmstadt, bezogen werden kann, wird dann unter Zwischenschaltung der Verbindungsschicht 16, die aus Klebematerial entsprechender Abstimmung besteht, mit der Trägerplatte 10 verklebt.

Bei dem in Fig. 2 gezeigten Ausführungsbeispiel trägt die Trägerplatte 10 wiederum die kratzfeste Oberflächenschicht 14, wobei in diesem Fall die Verbindung zwischen der Oberflächenschicht und der Trägerplatte 10 durch eine Haftfolie 18 aus Kunststoffmaterial bewerkstelligt ist. In Fig. 2 rechts ist die fertig beschichtete Trägerplatte gezeigt, die also aus der eigentlichen Trägerplatte 10, der Haftfolie 18 und der Oberflächenschicht 14 besteht. Weiter links in Fig. 2 ist ein Schichtaufbau gezeigt, bei dem sich auf dem vorstehend beschriebenen Aufbau noch eine Deckfolie 20 befindet, die in Richtung eines Pfeiles 22 von der Oberflächenschicht 14 abgezogen wird.

Die Herstellung der Trägerplatte gemäß Fig. 2 findet wie folgt statt: Zunächst wird eine im Rollenprägeverfahren verarbeitbare Folienanordnung hergestellt, die aus der Haftfolie 18, der Oberflächenschicht 14 und der Deckfolie 20 besteht. Diese Schichtanordnung wird dann im Rollenprägeverfahren, wie es bspw. in der DE-OS 38 08 689 beschrieben ist, unter Anwendung von Druck und Wärme auf die Trägerplatte 10 aufgebracht, wobei die Deckfolie 20 in Folge der Haftungsverhältnisse zwischen den einzelnen Schichten, wie beim Rollenprägen bekannt, von der Oberflächenschicht 14 abgezogen wird.

Die in der vorstehenden Beschreibung, in der Zeichnung sowie in den Ansprüchen offenbarten Merkmale der Erfindung, können sowohl einzeln als auch in beliebiger Kombination für die Verwirklichung der Erfindung in ihren verschiedenen Ausführungsformen wesentlich sein. 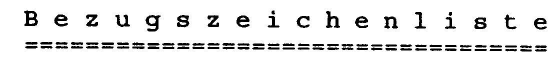
- 10: Trägerplatte
- 12: Kunststoffolie
- 14: Oberflächenschicht
- 16: Verbindungsschicht
- 18: Haftfolie
- 20: Deckfolie
- 22: Pfeil

## Patentansprüche

1. Verfahren zum Beschichten einer Trägerplatte aus zumindest teiltransparentem Kunststoffmaterial, insbesondere aus Polymethylmethacrylat, bei dem auf zumindest eine Fläche der Trägerplatte eine Oberflächenschicht aus im Vergleich zu Kunststoffmaterial der Trägerplatte wesentlich härteren, kratzfesten, vorzugsweise anorganischen Material, wie SiO₂ oder dergleichen, aufgebracht wird, dadurch gekennzeichnet, daß die Oberflächenschicht zunächst auf eine Kunststoffolie aufgebracht und alsdann der aus der Kunststoffolie und der Oberflächenschicht bestehende Vorverbund mit der Trägerplatte verbunden wird.

2. Verfahren nach Anspruch 1, dadurch gekennzeichnet, daß der Vorverbund mit der Trägerplatte verklebt wird.

3. Verfahren nach Anspruch 1, dadurch gekennzeichnet, daß auf die der Kunststoffolie abgewandte Seite der Oberflächenschicht eine Deckfolie aufgebracht und die aus dem Vorverbund und der Deckfolie bestehende Schichtanordnung unter Verwendung der Kunststoffolie als Haftfolie unter Ablösen der Deckfolie im Rollenprägeverfahren mit der Trägerplatte verbunden wird.

4. Verfahren nach einem der vorangehenden Ansprüche, dadurch gekennzeichnet, daß eine Kunststoffolie aus Polymethylmethacrylat verwendet wird.

5. Trägerplatte aus zumindest teiltransparentem Kunststoffmaterial, insbesondere Polymethylmethacrylat, die zumindest auf einer Fläche mit einer Oberflächenschicht aus im Vergleich zum Kunststoffmaterial der Trägerplatte wesentlich kratzfesterem, vorzugsweise anorganischem Material, wie SiO₂ oder dergleichen, versehen ist, insbesondere hergestellt nach dem Verfahren nach einem der vorangehenden Anprüche, dadurch gekennzeichnet, daß die Oberflächenschicht (14) mit der Trägerplatte (10) unter Zwischenschaltung einer Kunststoffolie (12, 18) verbunden ist.

6. Trägerplatte nach Anspruch 5, dadurch gekennzeichnet, daß die Kunststoffolie (12) mit der Trägerplatte (10) verklebt ist.

7. Trägerplatte nach Anspruch 5, dadurch gekennzeichnet, daß die Kunststoffolie, als Haftfolie (18) ausgebildet, mit der Trägerplatte (10) im Rollenprägeverfahren verbunden ist.

8. Trägerplatte nach einem der Ansprüche 5 bis 7, dadurch gekennzeichnet, daß die Kunststoffolie (12, 18) aus Polymethylmethacrylat besteht.
